# EUROPÄISCHE PATENTSCHRIFT

(11) **EP 0 769 630 B1**
(45) Veröffentlichungstag und Bekanntmachung des Hinweises auf die Patenterteilung: **02.05.2002**
(21) Anmeldenummer: 96116391.2
(22) Anmeldetag: 12.10.1996
(51) Int. Cl.: F16C 33/66, F16C 33/60

(54) **Lagerung für den Rotor eines Abgasturboladers**
Bearing for a turbocharger rotor bearing
Palier pour rotor d'un turbo-compresseur

(30) Priorität: 17.10.1995 DE 19538553
(43) Veröffentlichungstag der Anmeldung: 23.04.1997
(73) Patentinhaber: Fag Aircraft/Super Precision Bearings GmbH, 97421 Schweinfurt (DE)
(72) Erfinder: Sebald, Wilhelm, 97209 Veitschöchheim (DE); Kreiselmeier, Gerhard, 97456 Dittelbrunn (DE)

(56) Entgegenhaltungen:
- DE-B- 1 127 673
- US-A- 5 183 342
- US-A- 5 302 031

## Beschreibung

Die Erfindung betrifft eine Lagerung für eine Rotorwelle eines Abgasturboladers nach dem Oberbegriff des Anspruchs 1, wie sie aus der US-A-5 302 031 bekannt geworden ist.

Aus der EP 0 143 950 B1 ist es bekannt, den Rotor eines Abgasturboladers an einer Lagerstelle mit zwei Schrägkugellagern in Tandemanordnung abzustützen. Die Wälzlager bestehen dabei wie üblich aus Innenring, Außenring und dazwischen angeordneten Wälzkörpern, wobei jeder Außenring in einem separaten Lagerhaltering festsitzt. Eine solche Lagerung ist wegen der vielen Einzelteile aufwendig, teuer und wartungsunfreundlich. Dabei ist es sehr schwierig, die beiden Wälzlagerreihen gleichmäßig mit Schmierstoff zu versorgen, wenn dieser nur von einer Seite dem Lager zugeführt werden kann.

Es ist deshalb Aufgabe der Erfindung eine Rotorlagerung der eingangs genannten Art so auszuführen, daß sie bei einfachem Aufbau und kostengünstiger Lagergestaltung eine gleichmäßige und zuverlässige Schmierstoffversorgung der beiden Wälzlagerreihen bei gleichem Einbauraum ermöglicht und außerdem eine sichere und wartungsfreundliche Handhabung gewährleistet.

Die Lösung dieser Aufgabe gelingt mit den im kennzeichnenden Teil des Anspruchs 1 angegebenen Merkmalen. Vorteilhafte Weiterbildungen sind in den Ansprüchen 2 -4 angegeben.

Durch die integrierte Lagerringgestaltung läßt sich eine kompakte, leichte, sicher handhabbare und kostengünstige Lagerung des Turoladers erreichen, die zudem zuverlässig mit Schmierstoff versorgt werden kann. Die Integration der Verdrehsicherung in den Außenring und die Anordnung des Ölschleuderansatzes am Innenring stellen ebenfalls kostengünstige Maßnahmen dar, die die Gesamtkonstruktion vereinfachen und die Betriebssicherheit erhöhen.

Die Erfindung soll an einem Ausführungsbeispiel erläutert werden.
- Figur 1: zeigt einen Querschnitt durch einen Abgasturbolader der Bauart, für den die erfindungsgemäße Lagerung vorzugsweise geeignet ist.
- Figur 2: zeigt vergrößert dargestellt einen Querschnitt durch das Lagerungsund Schmiersystem des Abgasturboladers nach Figur 1.

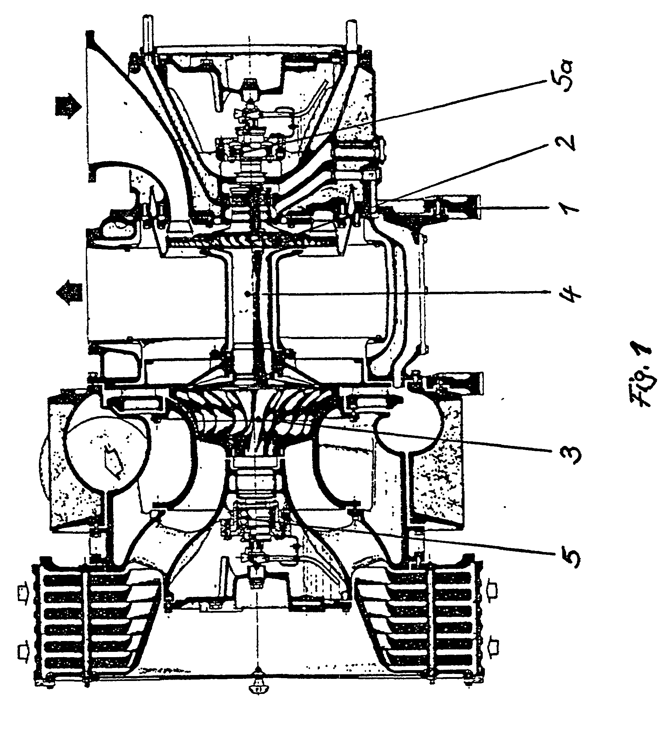

In Figur 1 ist das Turboladergehäuse mit 1 bezeichnet. In ihm sind ein Turbinenrad 2 und ein Verdichterrad 3 auf einer Welle 4 angerodnet, die von einem Lagersystem 5 und 5a abgestützt ist.

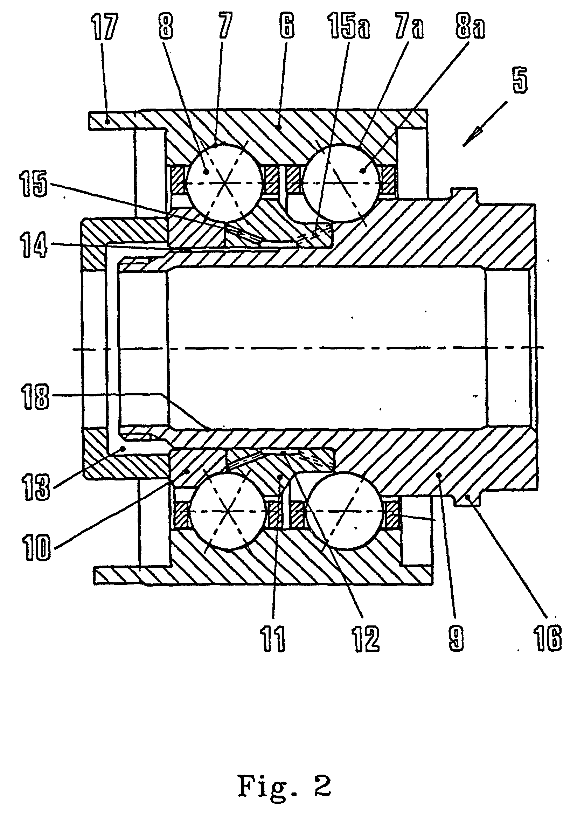

Wie aus Figur 2 ersichtlich ist, sind in dem einteilig ausgebildeten Lageraußenring 6 zwei Laufbahnen 7 für die Kugelreihen 8 und 8a angeordnet. Bei diesem Beispiel ist die rechte Kugelreihe zusammen mit dem inneren Innenring 9 als Schrägkugellager und die linke Kugelreihe mit dem geteilten mittleren Innenring 11 und äußeren Innenring 10 als Vierpunktlager ausgebildet. Der innere Innenring 9 des Schrägkugellagers erstreckt sich dabei axial bis unter das Vierpunktkugellager und trägt dessen mittleren Innenring 11 und äußeren Innenring 10.

Zur Lagerschmierung wird Öl in den ringförmigen Raum 13 gefördert. Um die beiden Laufbahnen 7, 7a und die Kugeln 8, 8a gleichmäßig mit Schmierstoff zu versorgen, ist im Manteldurchmesser des inneren Innenrings 9 mindestens eine Nut 14 angebracht, die mit dem ringförmigen Raum 13 und einem im Innenring 11 angeordneten Ringkanal 12 in Verbindung steht. Vom Ringkanal 12 führen Kanäle 15, 15a zu den beiden Seitenflächen des mittleren Innenrings 11. Die Anzahl und die Teilung der Nuten 14, sowie die Teilung der Nuten 14 und der Kanäle 15, 15a sind unterschiedlich und so aufeinander abgestimmt, daß ein bevorzugter Schmiermittelfluß zu nur einer der Kugelreihen 8 bzw. 8a ausgeschlossen wird.

Der innere Innenring 9 ist außerdem mit einem Ölschleuderansatz 16 versehen.

Zur Verdrehsicherung ist der Außenring 6 mit axial verlaufenden Ansätzen 17 versehen. Um der Lagerung gewisse elastische Eigenschaften zu verleihen ist der innere Innenring 9 des Schrägkugelllagers in seiner Bohrung mit einer Ausdrehung 18 versehen, die sich über die Lagerbreite hinaus erstreckt.

## Patentansprüche

1. Lagerung für eine Rotorwelle eines Abgasturboladers bestehend aus einem Außenring, zwei Wälzkörperreihen, drei Innenringen, in der die eine Seite der Rotorwelle eines Abgasturboladers abstütztbar ist, wobei die Schmierstoffversorgung über integrierte Kanäle erfolgt, wobei der Lageraußenring (6) einteilig ausgebildet ist und zwei Laufbahnen (7, 7a) für die Wälzkörperreihen (8, 8a) aufweist, der innere Innenring (9) der einen Wälzkörperreihe sich axial bis unter die zweite Wälzkörperreihe erstreckt und den mittleren Innenring (11) und den äußeren Innenring (10) trägt, und wobei am mittleren Innenring (11) in der innenliegenden Mantelfläche ein Ringkanal (12) vorgesehen ist, **dadurch gekennzeichnet, daß** der Ringkanal (12) mit mindestens einer aus dem Lager herausführenden Nut (14) verbunden ist, daß von ihm aus Kanäle (15, 15a) durch den mittleren Innenring (11) zu beiden Laufbahnen (7, 7a) führen, um diese und die Wälzkörperreihen (8, 8a) mit Schmierstoff zu versorgen, daß die Anzahl der Nuten (14) und die Anzahl der Kanäle (15, 15a) unterschiedlich ist und so aufeinander abgestimmt sind, daß der Schmierstoff in jeder beliebigen Position der Innenringe (9,11) gleichmäßig auf die Wälzkörperreihen (8, 8a) verteilt wird und daß ein Teil der Kanäle (15) der einen Walzkorperreihe (8) und ein Teil der Kanäle (15a) der anderen Wälzkörperreihe (8a) zugeordnet sind.

2. Lagerung nach Anspruch 1, **dadurch gekennzeichnet, daß** die zu den beiden Laufbahnen (7, 7a) führenden Kanäle (15, 15a) an den beiden Seitenflächen des mittleren Innenrings (11) austreten.

3. Lagerung nach Anspruch 1, **dadurch gekennzeichnet, daß** der Außenring (6) mit axial verlaufenden Ansätzen (17) zur Verdrehsicherung versehen ist.

4. Lagerung nach Anspruch 1, **dadurch gekennzeichnet, daß** der Innenring (9) des Schrägkugellagers einen Ölschleuderansatz (16) aufweist.

## Claims

1. A bearing for a rotor shaft of an exhaust-gas turbocharger comprising an outer race, two rows of rolling members and three inner races for supporting one end of the rotor shaft of an exhaust-gas turbocharger, wherein lubricant is supplied through incorporated ducts, wherein the outer race (6) is in one piece and has two races (7, 7a) for the rows (8a, 8a) of rolling members, the inner inner race (9) for one row of rolling members extends axially under the second row of rolling members and bears the middle inner race (11) and the outer inner race (10), and wherein an annular duct (12) is formed in the inner cylindrical surface of the middle inner race (11), **characterised in that** the annular duct (12) is connected to at least one groove (14) extending out of the bearing, and ducts (15, 15a) lead from the duct (12) through the middle inner race (11) to both races (7, 7a) so as to supply lubricant to them and to the rows of rolling members (8, 8a), and the number of grooves (14) and the number of ducts (15, 15a) vary and are adapted to one another so that in any arbitrary position of the inner races (9, 11) the lubricant is uniformly distributed among the rows (8, 8a) of rolling members and some of the ducts (15) are associated with one row (8) of rolling members and some of the ducts (15a) are associated with the other row (8a) of rolling members.

2. A bearing according to claim 1, **characterised in that** the ducts (15, 15a) leading to the two races (7, 7a) emerge at the two side surfaces of the middle inner race (11).

3. A bearing according to claim 1, **characterised in that** the outer race (6) has a torsion-preventing means in the form of axial projections (17).

4. A bearing according to claim 1, **characterised in that** the inner race (9) of the angular ball bearing has an oil slinger attachment (16).

## Revendications

1. Palier pour un arbre de rotor d'un turbocompresseur entraîné par les gaz d'échappement, composé d'une bague extérieure, de deux rangées de corps de roulement, de trois bagues intérieures, palier dans lequel une extrémité de l'arbre de rotor de turbocompresseur entraîné par les gaz d'échappement est susceptible d'être soutenu, l'alimentation en lubrifiant se faisant par des canaux intégrés, la bague extérieure de palier (6) étant réalisée d'une seule pièce et présentant deux pistes de roulement (7, 7a) pour les rangées de corps de roulement (8;8a), la bague intérieure (9) interne de l'une des rangées de corps de roulement s'étendant axialement, jusqu'au dessous de la deuxième rangée de corps de roulement et portant la bague intérieure (11) médiane et la bague intérieure (10) externe, et, sur la bague intérieure (11) médiane, un canal annulaire (12) étant prévu sur la surface d'enveloppe intérieure, **caractérisé en ce que** le canal annulaire (12) est relié à au moins une rainure (14) sortant du palier, **en ce que**, depuis la rainure (12), des canaux (15, 15a) passent par la bague intérieure (11) médiane et vont vers les deux pistes de roulement (7, 7a), afin d'alimenter en lubrifiant ces pistes de roulement et les rangées de corps de roulement (8, 8a), et **en ce que** le nombre de rainures (14) et le nombre des canaux (15, 15a) sont différents et sont adaptés de manière que le lubrifiant soit réparti régulièrement sur les rangées de corps de roulement (8, 8a) pour toute position des bagues intérieures (9, 11), et **en ce qu'**une partie des canaux (15) est associée à la première rangée de corps de roulement (8) et une partie des canaux (15a) est associée à l'autre rangée de corps de roulement (8a).

2. Palier selon la revendication 1, **caractérisé en ce que** les canaux (15, 15a) menant aux deux pistes de roulement (7, 7a) sortent des deux faces latérales de la bague intérieure (11) médiane.

3. Palier selon la revendication 1, **caractérisé en ce que** la bague extérieure (6) est munie d'appendices (17) s'étendant axialement, dans le but d'assurer le blocage en rotation.

4. Palier selon la revendication 1, **caractérisé en ce que** la bague intérieure (9) du roulement à billes à contact oblique présente un appendice d'éjection par centrifugation de l'huile (16).
